# FASCICULE DE BREVET EUROPEEN

(11) **EP 3 409 941 B1**
(45) Date de publication et mention de la délivrance du brevet: **25.09.2019**
(21) Numéro de dépôt: 18020127.9
(22) Date de dépôt: 29.03.2018
(51) Int. Cl.: F03D 7/02, F03D 5/00

(54) **ÉOLIENNE À AXE DE ROTOR INCLINÉ DE 45° PAR RAPPORT À LA VERTICALE EN FORME D'ARBRE S'INTÉGRANT DANS LES PAYSAGES**
WINDKRAFTANLAGE MIT UM 45° GENEIGTER ROTORACHSE GEGENÜBER DER SENKRECHTACHSE IN FORM EINES BAUMS, DER SICH IN DIE LANDSCHAFT EINFÜGT
WIND TURBINE WITH ROTOR AXIS TILTED BY 45° RELATIVE TO THE VERTICAL, IN THE FORM OF A TREE INTEGRATING WITH THE LANDSCAPE

(30) Priorité: 29.05.2017 FR 1700575
(43) Date de publication de la demande: 05.12.2018
(73) Titulaire: Knaub, Vincent, 67630 Neewiller-Pres-Lauterbourg (FR)
(72) Inventeur: Knaub, Vincent, 67630 Neewiller-Pres-Lauterbourg (FR)

(56) Documents cités:
- WO-A1-2008/147327
- US-A- 3 187 816
- US-A1- 2013 134 715

## Description

La présente invention concerne une éolienne à axe de rotor incliné de 45° par rapport à la verticale, à 4 pales fixes disposées à 90° l'une par rapport à l'autre autour de l'axe de ce rotor, et qui ressemble à un arbre afin de s'intégrer dans les paysages. Elle peut produire de l'électricité ou pomper de l'eau. Deux éoliennes dont les axes de rotation sont orientés à 45° par rapport à la verticale sont connues à partir des documents WO 2008/147327 et US 3187816.

Les éoliennes à axe vertical existant actuellement et qui sont équipées soient de pales fixes concaves ou de pales de section identiques aux ailes d'avion selon le principe de Darrieus, délivrent un couple du rotor relativement faible, parce que la pale qui se déplace contre le sens du vent freine énormément le système. Les éoliennes à axe vertical et à pales concaves fixes ont une forme symétrique vues de face. Le vent s'engouffre dans la pale concave et il y résulte une surpression. La pale à l'opposé de l'axe vertical offre sa partie convexe au vent, et le vent dérape et contourne cette forme convexe. Il en résulte un couple du rotor par la différence de pression ; pression qui est légèrement supérieure dans la pale concave que sur la pale convexe de l'autre côté de l'axe vertical. Les éoliennes à axe vertical construites selon le principe de Darrieus présentent également une forme symétrique vues de face. Le vent créé une surpression sur une pale, grâce à la forme de celle-ci. La pale à l'opposé de l'axe vertical laisse déraper le vent. Il en résulte un couple du rotor par la différence de pression. Ces éoliennes à axe vertical développent un couple tellement faible qu'il leur faut éventuellement un moteur électrique pour les mettre en mouvement lorsqu'un vent de faible puissance se lève après une période calme. Ces éoliennes à axe vertical ont un rendement nettement inférieur aux éoliennes à hélice, et sont beaucoup moins présentes sur le marché que ces dernières.

D'autre part, l'aspect trop technique de ces éoliennes à axe vertical ne permet pas une intégration harmonieuse dans les paysages. De plus, elles sont la plupart du temps de couleur blanche. Un ton bleu ciel ou gris serait plus approprié.

Le dispositif selon l'invention permet de délivrer un couple du rotor bien supérieur aux éoliennes à axe vertical actuelles, car la pale qui entraîne le rotor offre sa surface totale perpendiculairement au vent, et que la pale qui, de l'autre côté de l'axe se déplace contre celui-ci, s'éclipse en se positionnant à l'horizontale, soit parallèlement au vent et donc n'offrira plus de surface d'attaque. De plus, les autres pales restantes sont orientées en ce moment précis à 45° par rapport au sens du vent et vont ainsi participer à la rotation du rotor en se comportant comme les pales d'une hélice.

Le dispositif selon l'invention permet une meilleure intégration dans les paysages. La forme de boule compacte et sphérique du rotor de couleur verte évoque la couronne feuillue d'un arbre, et le mât de couleur brune rappelle le tronc d'arbre. Ainsi l'éolienne ressemble à un arbre et s'intègre dans les paysages.

Fonctionnement de l'éolienne d'après les figures 1 à 3, qui représentent l'éolienne en différentes vues. Les 4 pales (A), (B), (C) et (D) sont fixées sur le rotor et sont placées à 90° l'une par rapport à l'autre autour de l'axe (E).

Figure 1: vue frontale de l'éolienne. L'observateur se trouve dans le sens du vent.

Figure 2 : vue de profil de l'éolienne en utilisation normale, par vents de force exploitable, inférieur à Beaufort 7. Le sens du vent est indiqué par des flèches du côté gauche sur le dessin. L'axe du rotor est incliné de 45° par rapport à la verticale.

Figure 3 : vue de profil de l'éolienne pendant une tempête. Le sens du vent est indiqué par des flèches du côté gauche sur le dessin. L'axe du rotor est placé à la verticale.

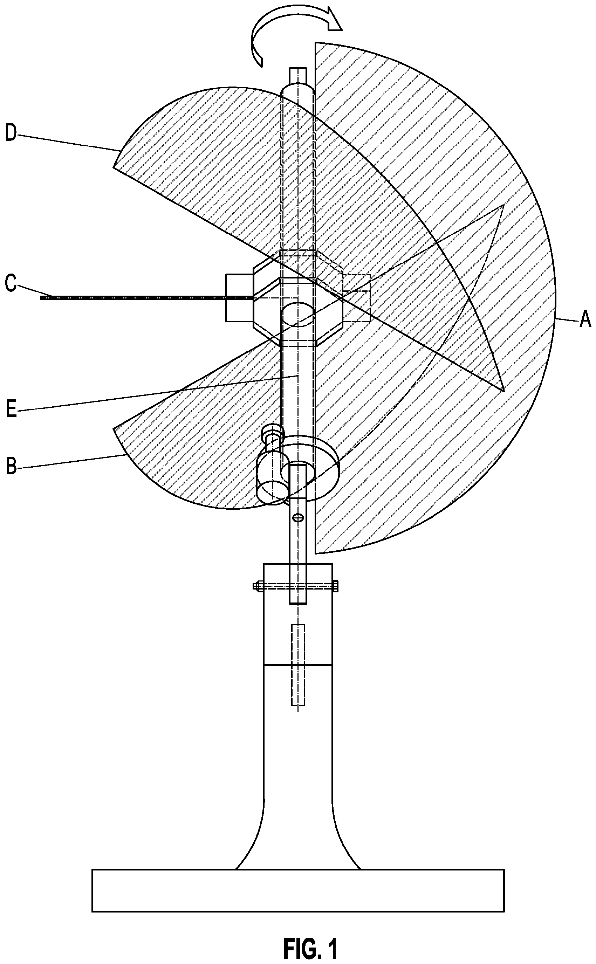

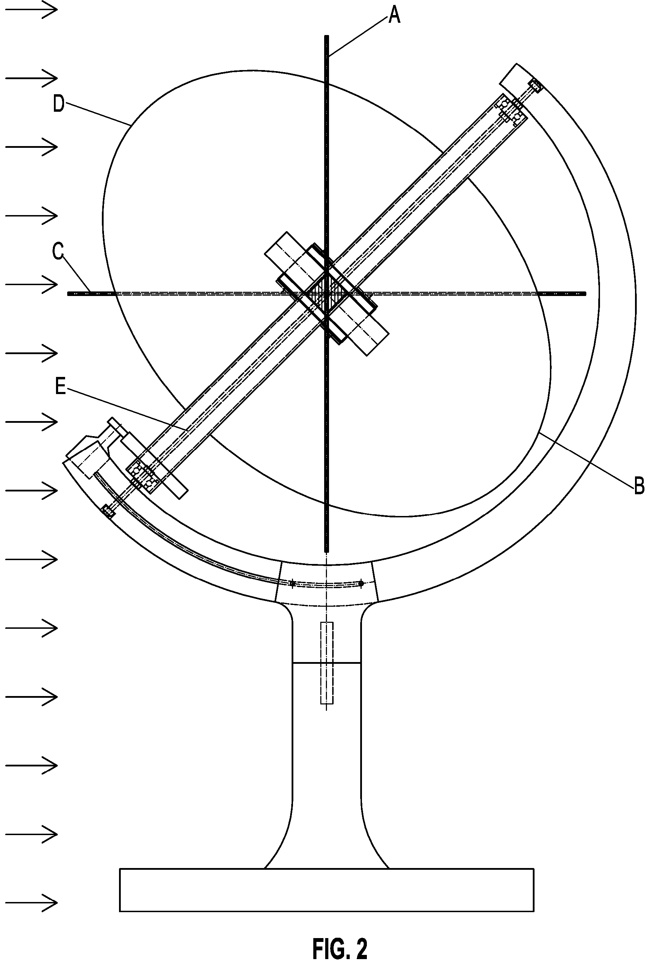

Les vents exploités par le dispositif ont une force de Beaufort 1 à 7. La pale (A) est fixée sur le rotor et est inclinée de 45° par rapport à l'axe (E), représentée sur la figure 2. L'axe (E) est lui-même incliné de 45° par rapport à la verticale. La pale (A) se trouve ainsi placée à la verticale et offre sa surface totale orthogonalement au vent, ce qui aura une efficacité maximale pour faire tourner le rotor. Celui-ci tourne dans le sens de la flèche au sommet de la figure 1. La surface totale de la pale (A) offerte au vent est représentée sur la figure 1.

La pale (C) est fixée sur le rotor et est également inclinée de 45° par rapport à l'axe (E), représentée sur la figure 2. La pale (C) se trouve diamétralement opposée à la pale (A) par rapport à l'axe (E). L'inclinaison de 45° de la pale (C) par rapport à l'axe (E) additionnée à l'inclinaison de l'axe (E) de 45° par rapport à la verticale fait que la pale (C) se retrouve à 90° par rapport à la verticale, donc à l'horizontale. Elle est ainsi parallèle au sens du vent et n'offre aucune prise à celui-ci en se déplaçant contre le vent. Ceci est représenté sur les figures 1 et 2.

La pale (D) est fixée sur le rotor et est également inclinée de 45° par rapport à l'axe (E), comme représenté sur les figures 1 et 2. Cette pale (D) participe également à faire tourner le rotor sous la force du vent. Elle se comporte comme la pale d'une hélice. La force du vent pousse sur la surface de la pale (D) qui est inclinée. Celle-ci se déplacera alors latéralement. Ce mouvement latéral est imposé par l'inclinaison de l'axe (E) représenté sur la figure 1.

De même, la pale (B), dont seulement une partie est offerte au vent, participe de la même façon que la pale (D) à faire tourner le rotor. Ceci est représenté sur la figure 1.

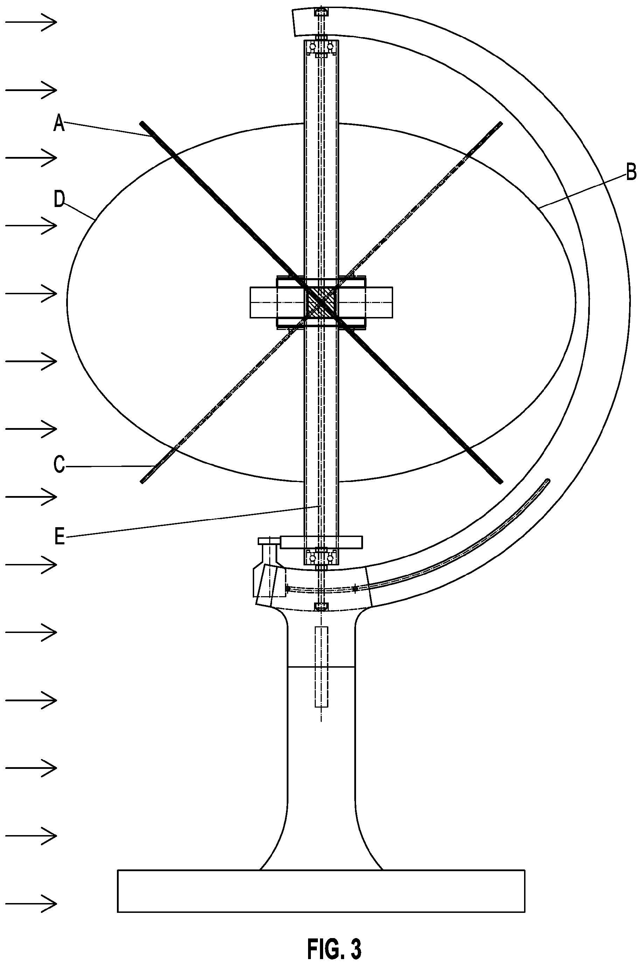

Fonctionnement de l'éolienne par vents forts et tempêtes. L'axe (E) du rotor est incliné de 45° par rapport à la verticale en utilisation normale. Avant la venue d'une tempête, l'inclinaison de l'axe (E) sera ramené à la verticale. Ceci est représenté sur la figure 3. Ainsi, toutes les pales offriront la même surface au vent. Les 4 pales sont toutes inclinées de 45° par rapport à l'axe (E) et sont montées de façon fixe sur le rotor. Le système offert au vent est entièrement symétrique. Les forces du vent sur les pales sont identiques de chaque côté de l'axe. Ainsi le rotor cessera de tourner.

L'éolienne est équipée d'un système de détection du sens du vent et d'un servomoteur qui oriente le rotor exactement dans ce sens. Le système de détection du sens du vent et le servomoteur ne sont pas représentés sur les dessins. Afin d'orienter le rotor dans le sens du vent, l'arceau contenant le rotor tourne sur l'axe vertical du mât grâce à une goupille. Ceci est expliqué dans un chapitre ultérieur.

Avantage de l'éolienne. L'effet de stroboscope est bien connu sur les éoliennes à hélice. En effet, les pales minces de l'hélice et les grands espaces libres entre les pales provoquent un effet de stroboscope dû aux ombres projetées par le soleil quand l'hélice tourne. Cet effet de stroboscope peut nuire à notre bien-être. Le dispositif selon l'invention ne présente que peu d'espaces libres entre les pales. Le rotor a la forme d'une boule compacte. Le soleil ne projettera pas beaucoup d'ombres à effet stroboscopique. De plus, cette éolienne aura une hauteur maximale de la taille d'un arbre. Ainsi les ombres dues au soleil levant ou couchant resteront dans des dimensions raisonnables, contrairement aux ombres des hélices qui portent très loin, car elles ont des hauteurs de nacelle de 100 m.

Un autre avantage de cette éolienne est le couple élevé développé par le rotor. Ce couple est supérieur à celui des éoliennes à hélice et à axe vertical existantes, pour le même diamètre du rotor. Ceci est dû à la pale qui offre sa surface totale perpendiculairement au vent et à la pale de l'autre côté de l'axe qui se place parallèlement au vent et n'offre ainsi aucune résistance en avançant contre lui. Cette éolienne produira ainsi plus d'électricité et sera donc un investissement qui s'amortira plus rapidement.

Un autre avantage de l'éolienne est une meilleure intégration dans la nature et dans les paysages. Le rotor a la forme d'une boule compacte et sphérique qui sera peinte de couleur verte comme le feuillage d'un arbre, et le mât aura la couleur brune afin d'évoquer le tronc d'un arbre.

Un autre avantage de l'éolienne est la protection des oiseaux. Les corbeaux, les buses, les faucons et les cigognes se posent toujours sur l'arbre le plus haut, pour observer les environs. L'éolienne sera placée à proximité d'arbres réels et elle aura quelques mètres de moins en hauteur que ceux-ci. Ainsi les oiseaux ne se poseront pas sur l'éolienne mais choisiront l'arbre plus grand à côté, et ne se feront pas écraser par le rotor quand il tournera.

Les oiseaux en vol regardent droit devant eux et voient bien l'éolienne frontalement dans toutes ses dimensions grâce à sa forme compacte, et ils peuvent donc l'éviter. Par contre, pour les éoliennes traditionnelles à hélice, les oiseaux en vol qui regardent droit devant eux ne voient pas les pales de l'hélice qui se déplacent orthogonalement à eux et qui viennent les percuter par le dessus, par le dessous ou par le côté comme un hachoir. Ainsi donc l'éolienne en forme d'arbre a cet avantage pour la sauvegarde des oiseaux.

Un autre avantage de l'éolienne concerne l'absence d'émissions de sons. Le dispositif selon l'invention comporte un rotor compact en forme de sphère. Les pales ne peuvent pas se déplacer plus rapidement que la vitesse du vent puisque c'est lui-même qui les pousse.

Par contre, sur les grandes éoliennes à hélice, l'extrémité des pales peut se déplacer à 400 km/h. L'extrémité de la pale possède donc une vitesse plusieurs fois supérieure à la vitesse du vent. De plus, les pales de l'hélice se déplacent perpendiculairement au sens du vent. Il en résulte des bruits qui peuvent nuire à notre santé.

### Liste des dessins :

Figure 1: vue frontale de l'éolienne. L'observateur se trouve dans le sens du vent.
Figure 2 : vue de profil de l'éolienne en utilisation normale par vents de force exploitable, inférieur à Beaufort 7. Le sens du vent est indiqué par des flèches du côté gauche sur le dessin. L'axe du rotor est incliné de 45° par rapport à la verticale.
Figure 3 : vue de profil de l'éolienne pendant une tempête. Le sens du vent est indiqué par des flèches du côté gauche sur le dessin. L'axe du rotor est placé à la verticale.

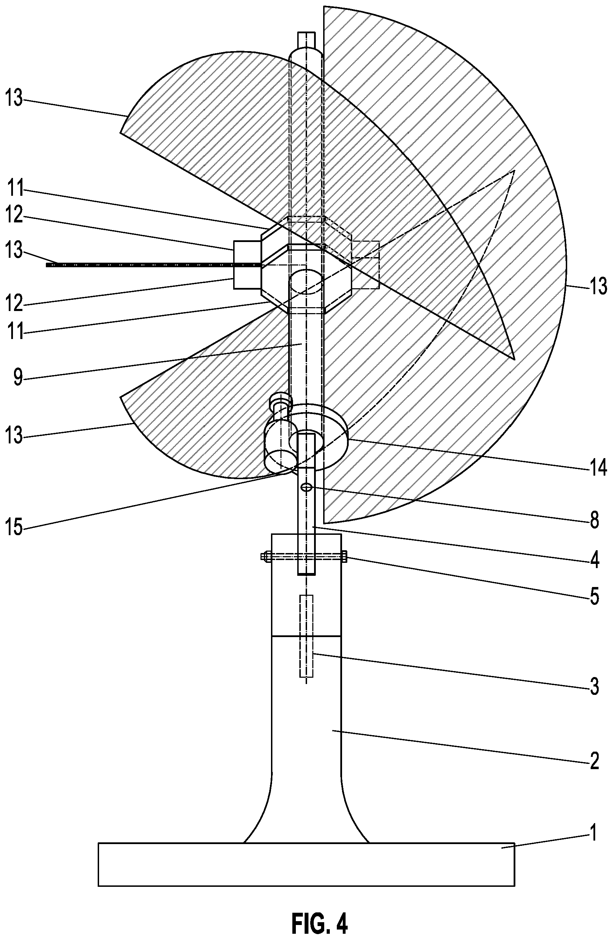

Figure 4 : dessin avec les numéros de référence des pièces. Vue frontale de l'éolienne. L'observateur se trouve dans le sens du vent.

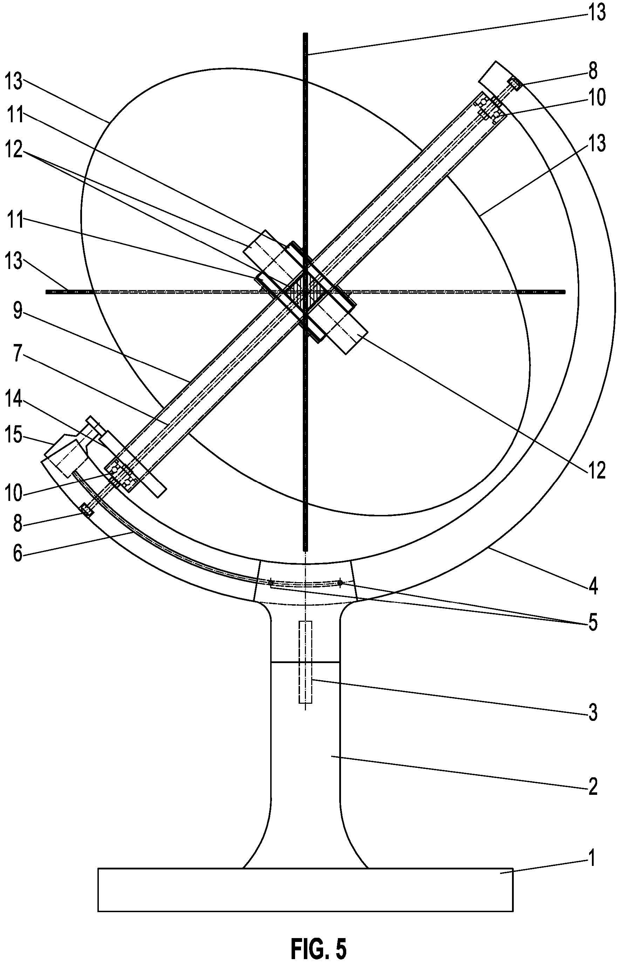

Figure 5 : dessin avec les numéros de référence des pièces. Vue de profil de l'éolienne en utilisation normale par vents de force exploitable, inférieur à Beaufort 7. L'axe du rotor est incliné de 45° par rapport à la verticale.

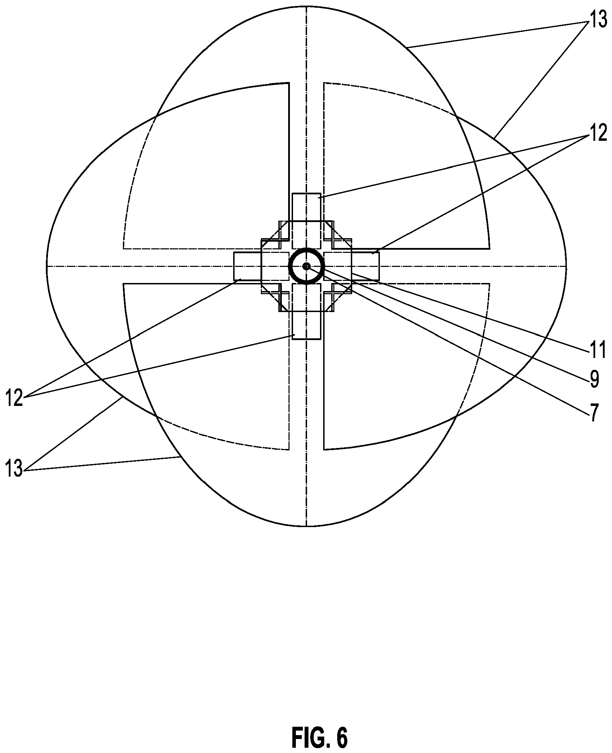

Figure 6 : dessin avec les numéros de référence des pièces. Vue en coupe du rotor. Coupe perpendiculaire à l'axe du rotor.

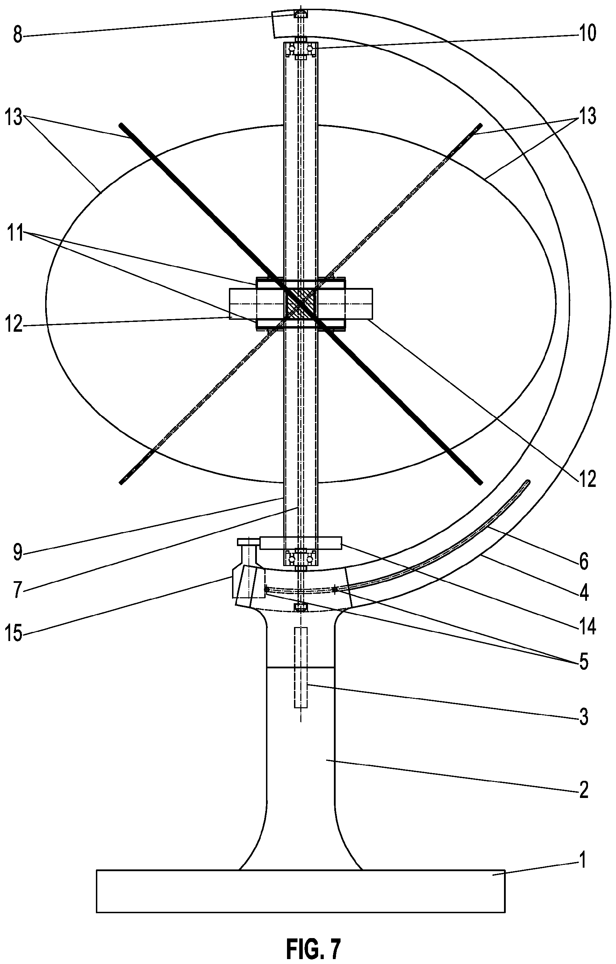

Figure 7 : dessin avec les numéros de référence des pièces. Vue de profil de l'éolienne pendant une tempête. L'axe du rotor est placé à la verticale.

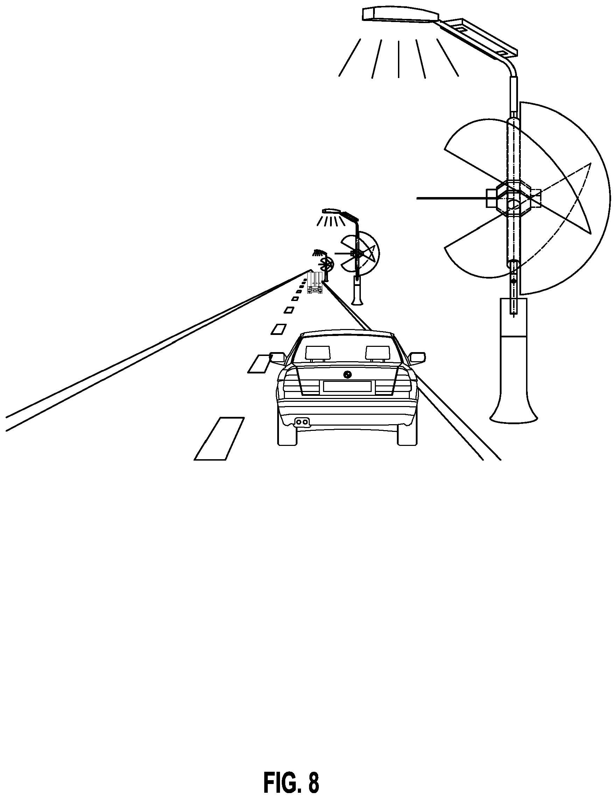

Figure 8 : l'éolienne utilisée comme lampadaire, en combinaison avec un panneau photovoltaïque situé sur le sommet de l'arceau et un accu dans le tronc.

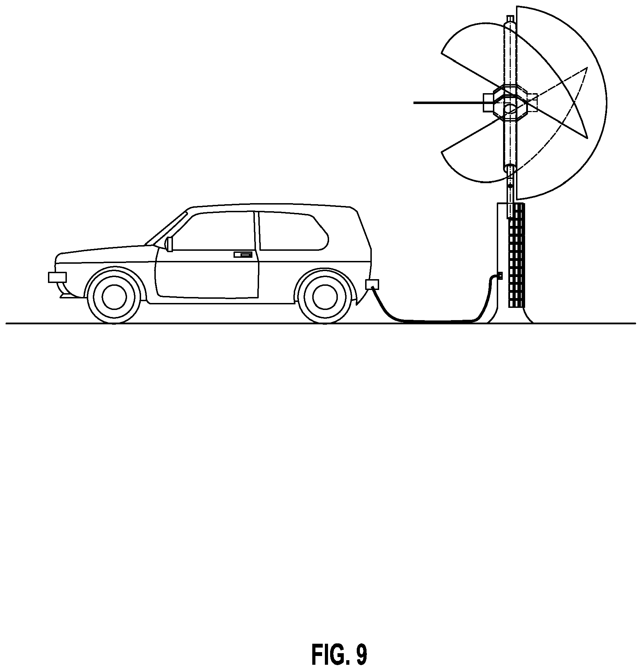

Figure 9 : l'éolienne utilisée comme borne de recharge pour les véhicules électriques, en combinaison avec des panneaux photovoltaïques placés sur la partie sud du tronc, et un accu installé dans celui-ci.

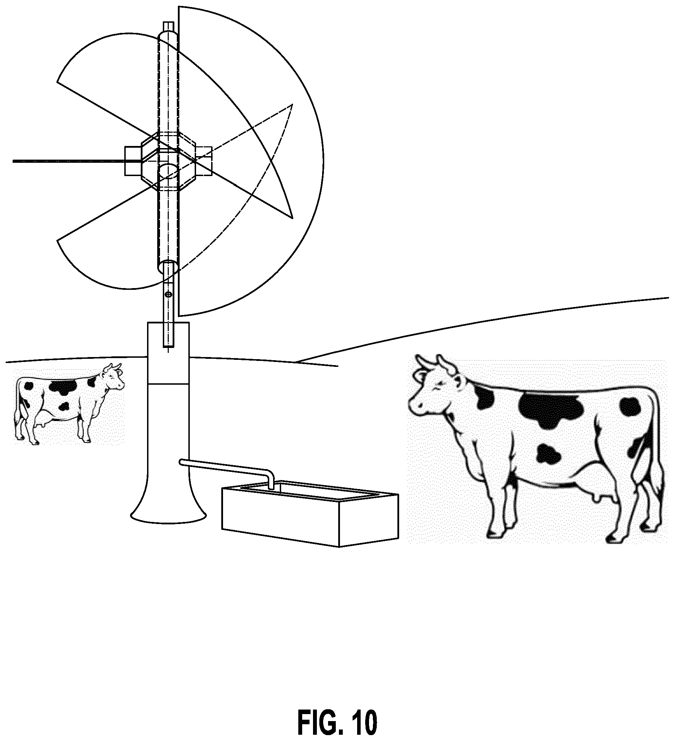

Figure 10 : l'éolienne utilisée comme pompe afin d'amener l'eau dans l'abreuvoir des bovins et des ovins.

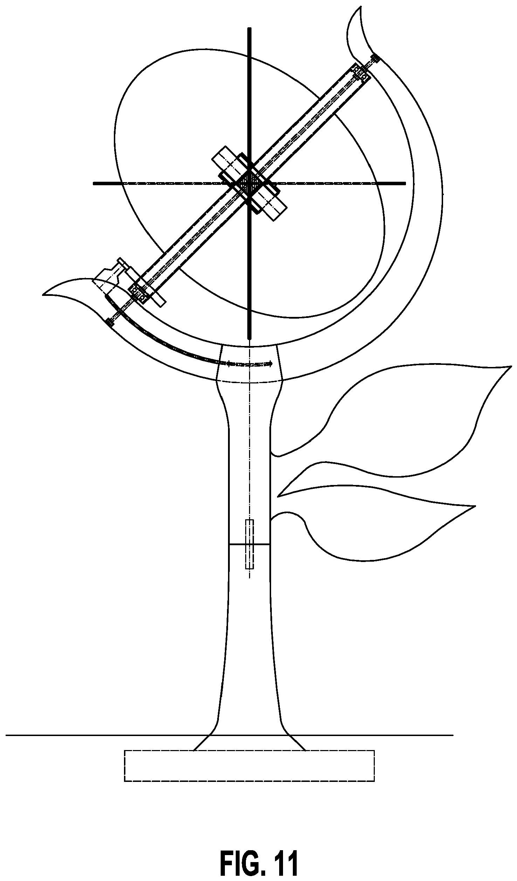

Figure 11 : l'éolienne construite en forme de fleur, avec des feuilles servant de girouette, représentée en vue de profil.

En référence aux figures 4 à 7, le dispositif comporte une fondation (1) en béton armé, sur laquelle est scellé un mât vertical (2). Le mât (2) comporte un axe vertical réalisé par une goupille (3) aux trois quart de sa hauteur. La partie supérieure du mât (2) avec le rotor complet pourra effectuer une rotation autour de l'axe vertical, afin de positionner l'éolienne dans le sens du vent. Le mât (2) comporte une fourche en son sommet, représentée sur la figure 4. L'arceau (4) en contreplaqué de la marque Multiplex d'épaisseur 24 mm fait office de membrure portante de l'axe du rotor qui est incliné de 45° par rapport à la verticale en utilisation normale.

L'arceau (4) est maintenu par serrage dans la fourche du mât (2) grâce aux deux vis (5). Ces deux vis (5) traversent une rainure (6) dans l'arceau (4). En dévissant les vis (5), l'arceau peut coulisser dans la rainure (6) et ainsi le rotor complet pourra basculer sur un angle maximal de 45°, et l'axe du rotor se retrouvera à la verticale. Cette position de l'éolienne sera utilisée lors d'une tempête. Ceci est représenté sur la figure 7.

Une tige filetée (7) M8 traverse le rotor de part en part et est fixée aux deux extrémités de l'arceau (4) par des écrous à frein (8) qui sont noyés dans des lamages. Cette tige filetée (7) matérialise l'axe du rotor.

Un tube (9) en PVC DN 50 forme la structure portante du rotor. Ce tube (9) est traversé de part en part par la tige filetée (7) sur laquelle sont montés deux roulements à billes (10) qui y sont maintenus par leur bague intérieure. Les bagues extérieures des roulements à billes (10) sont encastrées dans les extrémités du tube (9).

Deux plateaux (11) en contreplaqué de la marque Multiplex d'épaisseur 12 mm et de forme octogonale sont fixés sur le tube (9). Entre l'interstice de ces deux plateaux (11) sont fixés huit tasseaux (12) en bois de section triangulaire et isocèle. Ces tasseaux (12) possèdent deux angles de 45° et un angle de 90°. Les 4 pales (13) en contreplaqué d'épaisseur 4 mm sont disposées à 90° l'une par rapport à l'autre autour de l'axe du rotor et elles sont fixées chacune par deux tasseaux (12). Deux tasseaux (12) sont placés l'un en regard de l'autre et maintiennent une pale (13) par serrage sur la base de leur triangle, qui y est fixée et ainsi encastrée avec un angle de 45° par rapport à l'axe du rotor. Les deux tasseaux (12) sont fixés par un de leurs petits côtés sur les plateaux (11). Ceci est représenté sur la figure 5. Les quatre pales (13) ont la forme d'un demi-cercle. Ceci est représenté sur la figure 4, une vue frontale de l'éolienne, où l'on aperçoit la surface complète et réelle de la pale (13) à la droite de l'axe. Le rotor complet est ainsi une entité qui a approximativement la forme d'une sphère.

Un plateau (14) circulaire en contreplaqué de la marque Multiplex d'épaisseur 12 mm est fixé sur la partie basse du tube (9) du rotor. Une dynamo (15) de 6 Volt est fixée sur l'arceau (4). Le pignon de la dynamo (15) tourne par contact sur la circonférence du plateau (14) quand le rotor de l'éolienne tourne sous la force du vent. Ainsi, la dynamo (15) produit de l'électricité.

Avant l'arrivée d'une tempête ou d'un vent de force supérieure à Beaufort 8, l'éolienne est placée en mode tempête. L'inclinaison de l'axe du rotor est amenée à la verticale; ceci est représenté sur la figure 7. Pour arriver à cette position verticale, les vis (5) sont desserrées, puis l'arceau (4) qui contient le rotor entier, va coulisser dans la fourche du mât et les vis (5) vont coulisser dans la rainure (6). Lorsque les vis (5) arrivent en fin de course dans la rainure (6), l'axe du rotor se trouvera placé à la verticale. Les vis (5) seront resserrées. L'axe du rotor étant positionné à la verticale comme sur la figure 7, toutes les pales offriront la même surface au vent. Les 4 pales (13) sont inclinées de 45° par rapport à l'axe du rotor. Elles sont montées de façon fixe sur le rotor.

Le système ainsi offert au vent est entièrement symétrique. Les forces du vent sur les pales sont identiques de chaque côté de l'axe du rotor. Celui-ci ne produira aucun couple, et il s'arrêtera de tourner. Cette position anti-tempête avec l'axe du rotor à la verticale, qui doit interdire au rotor de tourner, fonctionne qu'importe la direction d'où vient le vent.

A titre d'exemple non limitatif, le rotor aura une dimension de l'ordre de 3 m de diamètre, et le mât aura 2 m de hauteur. Ceci pourraient être les dimensions d'une éolienne en forme d'arbre, à installer dans le jardin.

Le dispositif selon l'invention est particulièrement destiné à produire de l'électricité.

Selon des modes particuliers de réalisation:
l'éolienne peut être utilisée comme lampadaire, en combinaison avec un panneau photovoltaïque et une lampe situés sur le sommet de l'arceau, et un accu dans le tronc, comme représenté sur la figure 8. Les lampadaires fonctionnent en autarcie grâce à l'énergie solaire et au vent. Le câblage souterrain reliant les lampadaires est inutile. Les lampadaires sont placés à intervalle régulier le long de l'autoroute. Le rotor est orienté vers la venue des véhicules, de façon à profiter du déplacement d'air qu'ils provoquent. Si la direction des vents dominants coïncide avec le sens de la circulation automobile, alors la force du vent s'additionnera au déplacement d'air des véhicules et la production d'électricité sera accrue. L'accu situé dans le mât va stocker l'électricité produite par l'éolienne et le panneau photovoltaïque. L'accu restituera l'électricité pour l'éclairage des voies de circulation pendant la nuit.

L'éolienne peut être utilisée comme borne de recharge pour les véhicules électriques, en combinaison avec des panneaux photovoltaïques placés sur la partie sud du tronc, et un accu installé dans le tronc, comme représenté sur la figure 9. Cette borne de recharge d'éolienne combinée au photovoltaïque fonctionne en autarcie. L'accu situé dans le mât va stocker l'électricité produite par l'éolienne et les panneaux photovoltaïques. L'accu restituera l'électricité par une prise située dans le tronc, pour recharger une voiture électrique.

L'éolienne peut être utilisée comme une pompe afin d'arroser les céréales dans les champs ou d'amener l'eau dans l'abreuvoir des bovins et des ovins, comme représenté sur la figure 10. Au lieu de produire de l'électricité grâce à un générateur, une pompe sera entraînée par le rotor. L'eau de la nappe phréatique sera pompée. Ce système fonctionne en autarcie et est intéressant dans les pâturages et les champs, où il n'y a pas d'électricité disponible pour alimenter une pompe électrique.

L'éolienne peut être construite sous la forme d'une fleur, comme représenté sur la figure 11. Elle pourra être installée dans le jardin. Le rotor est de deux couleurs différentes afin de ressembler à un tournesol: gris foncé au centre symbolisant le noyau, et jaune sur le pourtour des pales symbolisant les pétales. L'arceau et le mât sont de couleur verte.

Deux feuilles sont fixées sur le mât. Elles servent de girouette pour orienter le rotor dans le sens du vent; le mât pouvant tourner sur son axe vertical grâce à la goupille. Cette éolienne en forme de fleur aurait une hauteur maximale de 3 mètres, avec une fleur d'un mètre de diamètre. Elle produit de l'électricité.

### Liste des numéros de référence utilisés dans la description, les revendications et les dessins:

- 1: Fondation
- 2: Mât vertical
- 3: Goupille
- 4: Arceau
- 5: Vis de serrage de l'arceau
- 6: Rainure dans l'arceau
- 7: Tige filetée
- 8: Ecrou à frein
- 9: Tube, structure portante du rotor
- 10: Roulement à billes
- 11: Plateau
- 12: Tasseau de section triangulaire
- 13: Pale
- 14: Plateau circulaire
- 15: Dynamo

## Revendications

1. Dispositif ayant la fonction d'une éolienne présentant un axe de rotor incliné de 45° par rapport à la verticale et avec quatre pales fixes disposées à 90° l'une par rapport à l'autre autour de l'axe de ce rotor, en forme d'arbre s'intégrant dans les paysages, qui produit de l'électricité grâce à un générateur, ledit dispositif comportant un mât vertical (2) scellé dans une fondation (1), **caractérisée en ce qu'**un arceau (4) formant la structure portante du rotor est maintenu par une fourche au sommet du mât (2), et que l'arceau (4) porte l'axe du rotor incliné de 45° par rapport à la verticale, et que l'axe de ce rotor est constitué d'un tube (9) monté sur une tige filetée (7) grâce à deux roulements à billes (10), et que quatre pales (13) sont fixées sur le rotor et sont inclinées de 45° par rapport à l'axe de celui-ci, ces pales étant disposées à 90° l'une par rapport à l'autre autour de l'axe de ce rotor, et que la pale du côté droit de l'axe offre sa surface totale perpendiculairement au vent qui la pousse et fait tourner le rotor, et que la pale du côté gauche de l'axe qui se déplace contre le vent est positionnée à l'horizontale et n'offre aucune résistance à celui-ci, et que les deux autres pales se comportent comme les pales d'une hélice de part leur inclinaison, et participent aussi à la rotation du rotor, et que l'éolienne est équipée d'un système de détection du sens du vent et d'un servomoteur qui oriente le rotor exactement dans ce sens grâce à la rotation du mât comportant une goupille (3), et que lors d'une tempête, l'inclinaison est ramenée à la verticale grâce à la rainure (6) dans l'arceau (4) et les vis (5), et qu'ainsi toutes les pales offriront la même surface au vent, et que le rotor s'arrêtera de tourner car il ne produira plus de couple, et que la forme de boule compacte et sphérique du rotor de couleur verte évoque la couronne feuillue d'un arbre, et que le mât de couleur brune rappelle un tronc d'arbre, et qu'ainsi l'éolienne s'intègre dans les paysages.

2. Utilisation du dispositif de la revendication 1 en tant que borne de recharge pour les véhicules électriques, en combinaison avec des panneaux photovoltaïques placés sur la partie sud du tronc, et un accu installé dans le tronc, ce système combiné fonctionnant en autarcie, l'accu étant situé dans le mât va stocker l'électricité produite par l'éolienne et les panneaux photovoltaïques, l'électricité étant restituée par l'accu par une prise située dans le tronc, afin de recharger une voiture électrique.

3. Dispositif ayant la fonction d'une éolienne qui évoque une fleur de tournesol avec sa tige et ses feuilles, présentant un axe de rotor incliné de 45° par rapport à la verticale et avec quatre pales fixes disposées à 90° l'une par rapport à l'autre autour de l'axe de ce rotor, qui produit de l'électricité grâce à un générateur, ledit dispositif comportant un mât vertical (2) scellé dans une fondation (1), **caractérisée en ce qu'**un arceau (4) formant la structure portante du rotor est maintenu par une fourche au sommet du mât (2), et que l'arceau (4) porte l'axe du rotor incliné de 45° par rapport à la verticale, et que l'axe de ce rotor est constitué d'un tube (9) monté sur une tige filetée (7) grâce à deux roulements à billes (10), et que quatre pales (13) sont fixées sur le rotor et sont inclinées de 45° par rapport à l'axe de celui-ci, ces pales étant disposées à 90° l'une par rapport à l'autre autour de l'axe de ce rotor, et que la pale du côté droit de l'axe offre sa surface totale perpendiculairement au vent qui la pousse et fait tourner le rotor, et que la pale du côté gauche de l'axe qui se déplace contre le vent est positionnée à l'horizontale et n'offre aucune résistance à celui-ci, et que les deux autres pales se comportent comme les pales d'une hélice de part leur inclinaison, et participent aussi à la rotation du rotor, et que l'éolienne est équipée d'un système de détection du sens du vent et d'un servomoteur qui oriente le rotor exactement dans ce sens grâce à la rotation du mât comportant une goupille (3), et que lors d'une tempête, l'inclinaison est ramenée à la verticale grâce à la rainure (6) dans l'arceau (4) et les vis (5), et qu'ainsi toutes les pales offriront la même surface au vent, et que le rotor s'arrêtera de tourner car il ne produira plus de couple, et que la forme de boule compacte et sphérique du rotor est de deux couleurs différentes afin de ressembler à une fleur de tournesol, soit gris foncé au centre symbolisant le noyau, et jaune sur le pourtour des pales symbolisant les pétales, et que l'arceau et le mât sont de couleur verte, et que deux feuilles fixées sur le mât servent de girouette pour orienter le rotor dans le sens du vent, le mât pouvant tourner sur son axe vertical grâce à la goupille, cette éolienne en forme de tournesol pouvant être installée dans le jardin et produisant de l'électricité.

## Patentansprüche

1. Windkraftanlage mit um 45° geneigter Rotorachse gegenüber der Senkrechtachse in Form eines Baums, der sich in die Landschaft eingefügt und mit vier feststehenden Blätter, die um die Achse dieses Rotors herum um 90° versetzt angeordnet sind, die mittels eines Generators Strom erzeugt, umfassend einen vertikalen Mast (2), der in einem Fundament (1) eingespannt ist, **dadurch gekennzeichnet, dass** ein Bogenrahmen (4), die die tragende Struktur für den Rotor bildet, durch eine Gabel an der Spitze des Mastes (2) gehalten wird, und dass der Bogenrahmen (4) die Achse des Rotors trägt, die um 45° zur Vertikalen geneigt ist, und dass die Achse dieses Rotors aus einem Rohr (9) besteht, das mittels zwei Kugellager (10) auf einer Gewindestange (7) montiert ist, und dass vier Blätter (13) auf dem Rotor befestigt sind und um 45° zur Achse desselben geneigt sind, wobei diese Blätter um die Achse dieses Rotors herum 90° zueinander angeordnet sind und dass das Blatt auf der rechten Seite der Achse seine gesamte Oberfläche senkrecht zu dem Wind aufweist, der es drückt und den Rotor dreht, und dass das Blatt auf der linken Seite, das sich gegen den Wind bewegt somit horizontal positioniert ist und dem Wind keinen Widerstand bietet, und dass sich die beiden anderen Blätter aufgrund ihrer Neigung wie die Blätter eines Propellers verhalten und auch an der Drehung des Rotors teilnehmen, und dass die Windkraftanlage mit einem Windrichtungserfassungssystem und einem Servomotor ausgestattet ist, der den Rotor durch Drehen des Mastes mit einem Stift (3) genau in diese Richtung ausrichtet, und dass während eines Sturms die Neigung der Rotorachse durch die Nut (6) im Bogenrahmen (4) und Schrauben (5) in die Vertikale gebracht wird, und dass somit alle Blätter dem Wind die gleiche Oberfläche bieten, und dass der Rotor aufhört zu drehen, weil er kein Drehmoment mehr erzeugt, und dass die kompakte Kugelform des grünen Rotors an die Blattkrone eines Baumes erinnert, und dass der braune Mast an einen Baumstamm erinnert und dass sich die Windkraftanlage so in die Landschaft einfügt.

2. Windkraftanlage nach Anspruch 1, **dadurch gekennzeichnet, dass** die Windkraftanlage als Ladestation für Elektrofahrzeuge in Kombination mit Photovoltaikmodulen, die auf dem südlichen Teil des Baumstamms angeordnet sind, und einer im Baumstamm installierten Batterie, wobei dieses kombinierte System autark arbeitet und die Batterie den erzeugten Strom der Windturbine und der Photovoltaikmodulen speichert, wobei die Elektrizität von der Batterie über eine im Stamm befindliche Steckdose zurückgeführt wird, um ein Elektroauto zu laden.

3. Windkraftanlage nach Anspruch 1, **dadurch gekennzeichnet, dass** die Form einer Sonnenblume gleicht, und die Windkraftanlage eine Rotorachse hat, die um 45° zur Senkrechtachse geneigt ist, und mit vier feststehenden Blätter, die um die Achse dieses Rotors herum um 90° versetzt angeordnet sind, die mittels eines Generators Strom erzeugt, umfassend einen vertikalen Mast (2), der in einem Fundament (1) eingespannt ist, **dadurch gekennzeichnet, dass** ein Bogenrahmen (4), die die tragende Struktur für den Rotor bildet, durch eine Gabel an der Spitze des Mastes (2) gehalten wird, und dass der Bogenrahmen (4) die Achse des Rotors trägt, die um 45° zur Vertikalen geneigt ist, und dass die Achse dieses Rotors aus einem Rohr (9) besteht, das mittels zwei Kugellager (10) auf einer Gewindestange (7) montiert ist, und dass vier Blätter (13) auf dem Rotor befestigt sind und um 45° zur Achse desselben geneigt sind, wobei diese Blätter um die Achse dieses Rotors herum 90° zueinander angeordnet sind und dass das Blatt auf der rechten Seite der Achse seine gesamte Oberfläche senkrecht zu dem Wind aufweist, der es drückt und den Rotor dreht, und dass das Blatt auf der linken Seite, das sich gegen den Wind bewegt somit horizontal positioniert ist und dem Wind keinen Widerstand bietet, und dass sich die beiden anderen Blätter aufgrund ihrer Neigung wie die Blätter eines Propellers verhalten und auch an der Drehung des Rotors teilnehmen, und dass die Windkraftanlage mit einem Windrichtungserfassungssystem und einem Servomotor ausgestattet ist, der den Rotor durch Drehen des Mastes mit einem Stift (3) genau in diese Richtung ausrichtet, und dass während eines Sturms die Neigung der Rotorachse durch die Nut (6) im Bogenrahmen (4) und Schrauben (5) in die Vertikale gebracht wird, und dass somit alle Blätter dem Wind die gleiche Oberfläche bieten, und dass der Rotor aufhört zu drehen, weil er kein Drehmoment mehr erzeugt, und dass die kompakte Kugelform des Rotors zwei verschiedene Farben aufweist, um einer Sonnenblume zu ähneln, nämlich dunkelgrau in der Mitte, die den Kern symbolisiert, und gelb am Umfang der Blätter, die die Blütenblätter symbolisieren, und dass der Bogenrahmen und der Mast eine grüne Farbe aufweisen, und dass zwei am Mast befestigte Blätter als Wetterfahne dienen, um den Rotor in die Windrichtung zu lenken, wobei sich der Mast dank des Stiftes um seine vertikale Achse dreht, und dass diese sonnenblumenförmige Windturbine im Garten installiert werden kann um Strom zu erzeugen.

## Claims

1. Device having the function of a wind turbine having a rotor axis inclined 45° with respect to the vertical and with four fixed blades arranged at 90° with respect to each other about the axis of this rotor, in the shape of a tree integrated into the landscape, which produces electricity thanks to a generator, said device comprising a vertical mast (2) sealed in a foundation (1), **characterized in that** an arch (4) forming the bearing structure of the rotor is maintained by a fork at the top of the mast (2), and that the hoop (4) carries the axis of the rotor inclined by 45° with respect to the vertical, and that the axis of this rotor consists of a tube (9) mounted on a threaded rod (7) by means of two ball bearings (10), and that four blades (13) are fixed on the rotor and are inclined by 45° with respect to the axis thereof, these blades being arranged at 90° to each other around the axis of this rotor, and that the blade on the right side of the axis offers its total surface perpendicular to the wind pushing it and rotating the rotor, and that the blade on the left side of the axis moving against the wind is positioned horizontally and offers no resistance to the wind, and that the other two blades behave like the blades of a propeller because of their inclination, and also participate in the rotation of the rotor, and that the wind turbine is equipped with a wind direction detection system and a servomotor that orients the rotor exactly in this direction by rotating the mast with a pin (3), and that during a storm, the inclination is brought back to vertical by the groove (6) in the arch (4) and screws (5), and that thus all the blades will offer the same surface to the wind, and that the rotor will stop rotating because it will no longer produce torque, and that the compact and spherical ball shape of the green rotor evokes the leafy crown of a tree, and that the brown mast evokes a tree trunk, and that thus the wind turbine blends into the landscape.

2. Use of the device of claim 1 as a charging station for electric vehicles, in combination with photovoltaic panels placed on the southern part of the trunk, and a battery installed in the trunk, this combined system operating in self-sufficiency, the battery being located in the mast will store the electricity produced by the wind turbine and photovoltaic panels, the electricity being returned by the battery through a socket located in the trunk, in order to recharge an electric car.

3. Device having the function of a wind turbine which evokes a sunflower flower with its stem and leaves, having a rotor axis inclined 45° with respect to the vertical and with four fixed blades arranged at 90° with respect to each other about the axis of this rotor, which produces electricity thanks to a generator, said device comprising a vertical mast (2) sealed in a foundation (1), **characterized in that** a arch (4) forming the bearing structure of the rotor is held by a fork at the top of the mast (2), and that the hoop (4) carries the axis of the rotor inclined by 45° with respect to the vertical, and that the axis of this rotor consists of a tube (9) mounted on a threaded rod (7) by means of two ball bearings (10), and that four blades (13) are fixed on the rotor and are inclined by 45° with respect to its axis, these blades being arranged at 90° with respect to each other about the axis of this rotor, and that the blade on the right side of the axis offers its total surface perpendicular to the wind pushing it and rotating the rotor, and that the blade on the left side of the axis moving against the wind is positioned horizontally and offers no resistance to the wind, and that the other two blades behave like the blades of a propeller due to their inclination, and also participate in the rotation of the rotor, and that the wind turbine is equipped with a wind direction detection system and a servomotor that orients the rotor exactly in this direction by rotating the mast with a pin (3), and that during a storm, the inclination is brought back to vertical by the groove (6) in the arch (4) and screws (5), and that thus all the blades will offer the same surface to the wind, and that the rotor will stop rotating because it will no longer produce torque, and that the compact and spherical ball shape of the rotor is of two different colours in order to resemble a sunflower flower, namely dark grey at the centre symbolising the nucleus, and yellow on the perimeter of the blades symbolising the petals, and that the arch and the mast are of green colour, and that two leaves fixed on the mast serve as a weather vane to direct the rotor in the wind direction, the mast being able to rotate on its vertical axis thanks to the pin, this sunflower-shaped wind turbine can be installed in the garden and producing electricity.
